Europäisches Patentamt

European Patent Office

Office européen des brevets

(19)

(11) Veröffentlichungsnummer: **0 012 377**
**A1**

(12) **EUROPÄISCHE PATENTANMELDUNG**

(21) Anmeldenummer: **79104968.7**

(22) Anmeldetag: **06.12.79**

(51) Int. Cl.³: **H 04 N 7/00**

(30) Priorität: **18.12.78 DE 2854610**

(43) Veröffentlichungstag der Anmeldung: **25.06.80**
**Patentblatt 80/13**

(84) Benannte Vertragsstaaten: **AT CH DE FR GB NL**

(71) Anmelder: **ROBERT BOSCH GMBH,**
**Robert-Bosch-Strasse 7, D-6100 Darmstadt (DE)**

(72) Erfinder: **Marey, Mohamed, Dr., Dipl.-Ing.,**
**Tielterstrasse 1, D-6080 Gross-Gerau (DE)**

(54) **System zur bertragung von Signalen zwischen einer Fernsehkamera und deren Steuereinheit.**

(57)  Es wird ein System zur Übertragung von Signalen zwischen einer Fernsehkamera 3 und der mit ihr über Lichtleiter 1, 2 verbundenen Steuereinheit 4 vorgeschlagen. Bei diesem System werden einige Tonsignale, wie Verständigungssignale, amplitudenmoduliert und mit je einem anderen Tonsignal frequenzmoduliert. Diese frequenzmodulierten Signale werden danach mit dem Videosignal zusammen pulsmoduliert, wobei dieses pulsmodulierte Signalgemisch das Licht eines Lasers 6, 9 moduliert, welches zu einer in der Gegenstation angeordneten Fotodiode 8, 7 über Lichtleiter 1, 2 übertragen wird. Schließlich wird das von der Fotodiode 8, 7 in elektrische Signale gewandelte pulsmodulierte Signalgemisch in umgekehrter Reihenfolge und entsprechend der Modulationsart demoduliert.

Rl.-Nr. 1880/78

15. Dezember 1978   FE/PLI/Rz/Hö

ROBERT BOSCH GMBH, 7000 Stuttgart 1

System zur Übertragung von Signalen zwischen einer
Fernsehkamera und deren Steuereinheit

Stand der Technik

Die Erfindung geht aus von einem System zur Übertragung von Signalen zwischen einer Fernsehkamera und der mit ihr über Lichtleiter verbundenen Steuereinheit.

Es ist schon eine Einrichtung zur Übertragung von Informationen zwischen einer Fernsehkamera und einer über eine Lichtleitfaser mit ihr in Verbindung stehende Anzeige- und Steuervorrichtung bekannt (DE-AS 20 12 293). Bei dieser Einrichtung wird jedoch nur ein Videosignal von der Kamera zur Anzeigevorrichtung und ein Steuersignal in entgegengesetzter Richtung übertragen.

0012377

Rl.-Nr. 1880/78

## Vorteile der Erfindung

Das erfindungsgemäße System mit den kennzeichnenden Merkmalen des Hauptanspruches hat demgegenüber den Vorteil, das sämtliche für den studiomäßigen Betrieb einer Fernsehkamera, insbesondere einer Farbfernsehkamera, notwendigen Signale bei gutem Störabstand und Vermeidung von Nichtlinearitäten ohne größeren Aufwand übertragen werden können.

Durch die in den Unteransprüchen aufgeführten Maßnahmen sind vorteilhafte Weiterbildungen und Verbesserungen des im Hauptanspruch angegebenen Systems möglich.

## Zeichnung

Ein Ausführungsbeispiel der Erfindung ist in der Zeichnung dargestellt und in der nachfolgenden Beschreibung näher erläutert. Es zeigen:

Fig. 1 ein Blockschaltbild des erfindungsgemäßen Systems,
Fig. 2 zwei Diagramme der Frequenzverteilung der zu übertragenden Signale.

## Beschreibung der Erfindung

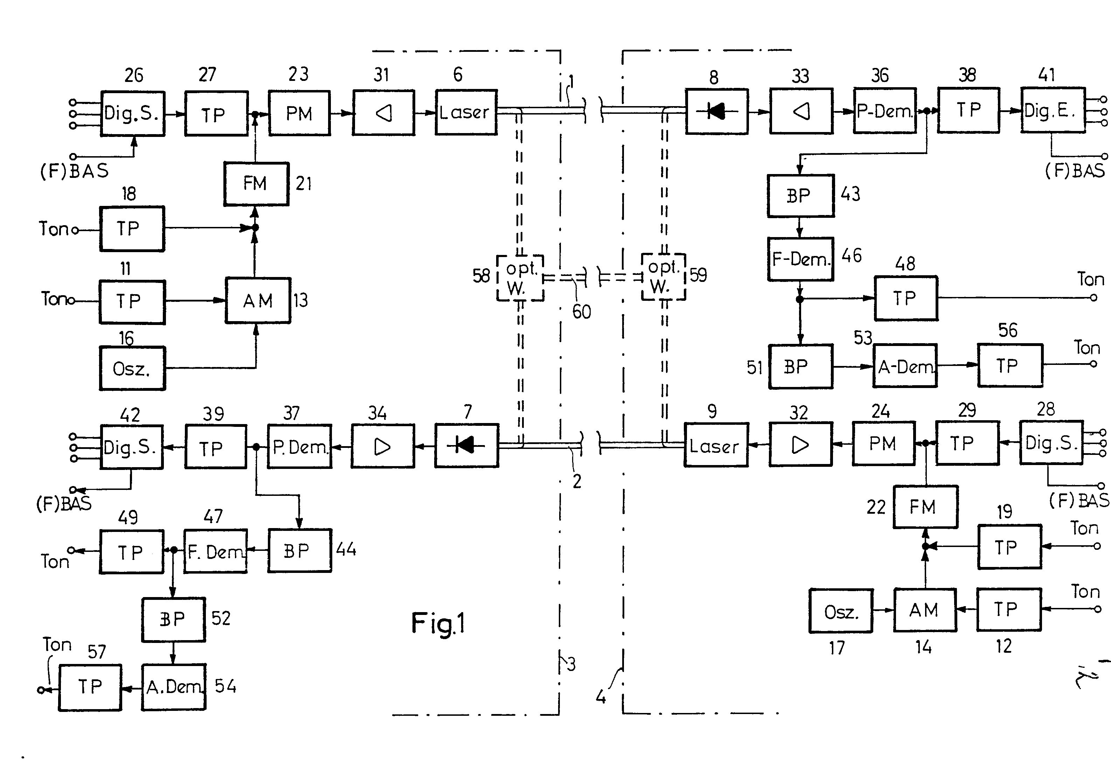

In Fig. 1 sind die für eine Übertragung der Signale über die Lichtleiter 1 und 2 notwendigen Teile in einer Farbfernsehkamera 3 und der zugehörigen Steuereinheit 4 dargestellt. Unmittelbar an die Enden des Lichtleiters 1 bzw. 2 sind in der Kamera 3 ein Laser 6, insbesondere

0012377
Rl.-Nr. 1880/78

ein Halbleiterinjektionslaser, bzw. eine Fotodiode 7, insbesondere eine Lawinen-Fotodiode, und in der Steuereinheit 4 eine Fotodiode 8 bzw. ein Laser 9 angeordnet.

Die Laser 6 und 9 geben entsprechend der zu übertragenden elektrischen Signale moduliertes Licht an die Lichtleiter 1 und 2 ab, welches empfangsseitig mit Hilfe der Fotodioden 8 und 7 in die entsprechenden elektrischen Signale wieder rückgewandelt wird.

Die für die Übertragung vorgesehenen und die Laser 6 und 9 modulierenden Signale werden wie folgt bearbeitet.

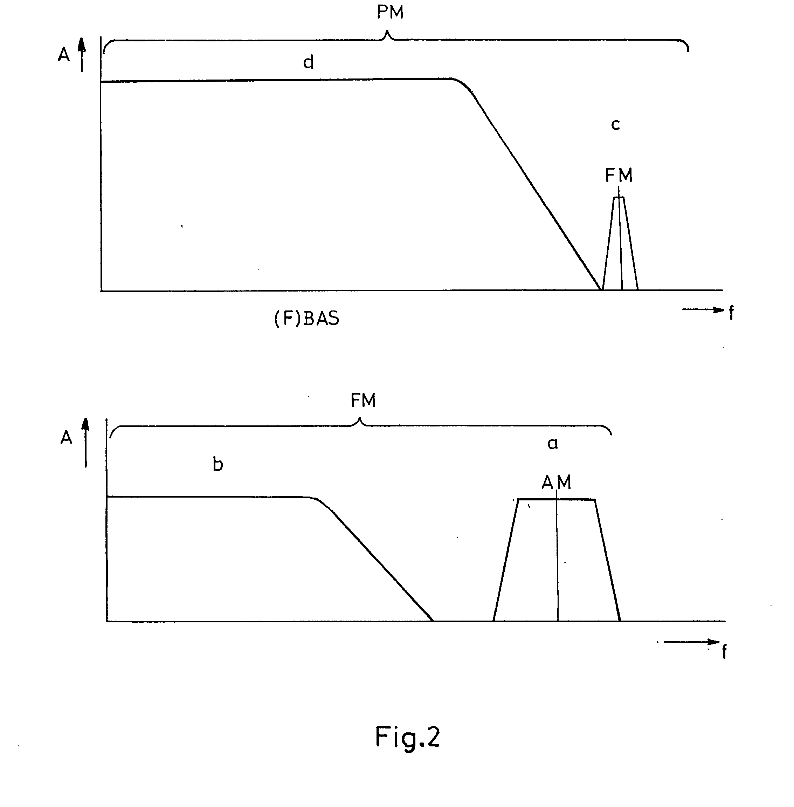

Die Tonsignale, beispielsweise die Verständigungssignale, werden sowohl in der Kamera 3 als auch in der Steuereinheit 4 über einen Tiefpaß 11 bzw. 12 einem Amplitudenmodulator 13 bzw. 14 zugeführt, dessen Trägerfrequenz (ca. 50 kHz) von einem Oszillator 16 bzw. 17 erzeugt wird. Am Ausgang des Amplitudenmodulators 13 bzw. 14 entsteht dann ein Frequenzband gemäß a in Fig. 2. Weitere Tonsignale könnten auf weiteren Trägern amplitudenmoduliert übertragen werden.

Ein anderes Tonsignal, beispielsweise der Mikrofonton kameraseitig bzw. der Kommando- oder Programmton auf der Seite der Steuereinheit 4, wird über einen Tiefpaß 18 bzw. 19 an den Ausgang des Amplitudenmodulators 13 bzw. 14 geführt (b in Fig. 2).

Diese amplitudenmodulierten und unmodulierten Tonsignale werden dann gemeinsam einem Frequenzmodulator 21 bzw. 22 (Trägerfrequenz ca. 12 MHz) zugeführt, an dessen Ausgang jeweils ein Frequenzband c gemäß Fig. 2 abnehmbar ist. Dieses trägerfrequente Signal wird nun gemeinsam mit einem (Farb-) Videosignal dem Eingang eines Pulsmodulators 23 bzw. 24, insbesondere Pulsfrequenzmodulators, zugeführt.

In der Kamera 3 wird das (Farb-) Videosignal von in der Zeichnung nicht dargestellten Aufnahmeröhren erzeugt und in üblicher Weise weiterverarbeitet. Dieses (Farb-) Videosignal wird einem Digitalsender 26 zugeführt, an dessen weiteren Eingängen zusätzliche Steuer- bzw. Rückmeldesignale angelegt sind. Diese Steuersignale werden digitalisiert und in die H- bzw. V-Lücken des Videosignals eingesetzt. Das am Ausgang des Digitalsenders 26 abnehmbare (Farb-) Videosignal mit digitaler Information in den Lücken wird einem Tiefpaß 27 zugeführt, an dessen Ausgang ein Signal mit einem Frequenzband gemäß d in Fig. 2 abnehmbar ist.

In der Steuereinheit 4 wird das (Farb-) Videosignal, beispielsweise das Suchersignal, ebenfalls einem Digitalsender 28 zugeführt, an dessen weiteren Eingängen Steuersignale für die Kamera 3 anliegen. Diese zur Steuerung einzelner Kamerafunktionen, wie z. B. Rasterdeckung, Objektivverstellung, Filtereinblendung usw., dienenden Signale werden ebenfalls digitalisiert und in die H- und V-Lücken des Videosignals eingesetzt. Das am Ausgang des Digitalsenders 28 abnehmbare Videosignal wird über einen Tiefpaß 29 dem Eingang des Pulsmodulators 24 gemeinsam mit dem frequenzmodulierten Signal (c in Fig. 2) zugeführt.

0012377

Das Ausgangssignal des Pulsmodulators 23 bzw. 24 wird über einen Verstärker 31 bzw. 32 dem jeweiligen Laser 6 bzw. 9 zugeführt, welcher entsprechend den in Fig. 2 dargestellten, die Frequenzbänder d und c umfassenden Signale moduliert wird.

Am anderen Ende des jeweiligen Lichtleiters 1 bzw. 2 werden die übertragenen Lichtsignale mit Hilfe der Fotodioden 8 bzw. 7 in elektrische Signale umgewandelt und in einem Verstärker 33 bzw. 34 verstärkt. Die Signale werden nun in umgekehrter Reihenfolge und entsprechend der Modulationsart wieder demoduliert.

Zunächst wird das Signal durch Demodulation im Pulsdemodulator 36 bzw. 37 in das (Farb-) Videosignal (d) und das frequenzmodulierte Signal (c) aufgespalten. Das Videosignal wird über einen Tiefpaß 38 bzw. 39 einem Digitalempfänger 41 bzw. 42 zugeführt. Hierbei werden die Steuersignale vom Videosignal getrennt, so daß an den Ausgängen des Digitalempfängers 41 bzw. 42 einerseits das (Farb-) Videosignal und andererseits die Steuersignale abnehmbar sind.

Das frequenzmodulierte Signal (c) wird über einen Bandpaßverstärker 43 bzw. 44 einem Frequenzdemodulator 46 bzw. 47 zugeführt, an dessen Ausgang die Signale mit den Frequenzbändern a und b entstehen. Das Mikrofon- bzw. Programmtonsignal (b) wird noch über einen Tiefpaß 48 bzw. 49 zugeführt. Die Verständigungssignale (gemäß a in Fig. 2), werden über einen Bandpaßverstärker 51 bzw. 52 einem Amplitudendemodulator 53 bzw. 54 zugeführt. Nach Demodulation werden die Signale ebenfalls über einen Tiefpaß 56 bzw. 57 geführt.

An den jeweiligen Ausgangsklemmen der Steuereinheit 4 bzw. der Kamera 3 sind Signale abnehmbar, die sich durch diese Übertragungsart kaum von den ursprünglichen Signalen unterscheiden.

Anstelle der beiden für die Hin- und Rückführung der Signale vorgesehenen Lichtleiter 1 und 2 ist es auch möglich, nur einen Lichtleiter für die Signalübertragung zu benutzen, indem - wie in der Zeichnung gestrichelt dargestellt ist - je eine optische Weiche 58,59 an den Enden des Lichtleiters 60 vorgesehen ist.

Rl.-Nr. 1880/78
15. Dezember 1978   FE/PLI/Rz/Hö

ROBERT BOSCH GMBH, 7000 Stuttgart 1

Ansprüche

1.   System zur Übertragung von Signalen zwischen einer Fernsehkamera und der mit ihr über Lichtleiter verbundenen Steuereinheit, dadurch gekennzeichnet, daß ein erster Träger mit einem Tonsignal und mindestens einem weiteren Träger, dessen Frequenz außerhalb des Frequenzbereichs des ersten Tonsignals liegt, frequenzmoduliert ist, daß der bzw. die weiteren Träger mit je einem weiteren Tonsignal amplitudenmoduliert sind, daß das Videosignal zusammen mit den frequenzmodulierten Signalen pulsmoduliert ist und daß dieses pulsmodulierte Signalgemisch das Licht eines Lasers (6 bzw. 9) moduliert, welches über Lichtleiter (1,2;60) zu einer in der Steuereinheit (4) bzw. in der Kamera angeordneten Fotodiode (8 bzw. 7) übertragen wird, und daß das von der Fotodiode in elektrische Signale gewandelte pulsmodulierte Signalgemisch in umgekehrter Reihenfolge und entsprechend der Modulationsart demoduliert wird.

2.   System nach Anspruch 1, dadurch gekennzeichnet, daß für die Übertragung der Signale von der Kamera zur Steuereinheit (4) und umgekehrt je ein Lichtleiter (1,2) vorgesehen ist.

3. System nach Anspruch 1, dadurch gekennzeichnet, daß für die Übertragung der Signale von der Kamera (3) zur Steuereinheit (4) und umgekehrt nur ein Lichtleiter (60) vorgesehen ist, und daß an den beiden Anschluß - enden des Lichtleiters je eine optische Weiche (58,59) angeordnet ist.

4. System nach Anspruch 1, dadurch gekennzeichnet, daß weitere Signale, wie Steuersignale für die Kamera (3) bzw. Rückmeldesignale an die Steuereinheit (4), als digitale Signale in den H- und V-Lücken des Videosignals übertragen werden.

Fig.1

26 Dig.S. — 27 TP — 23 PM — 31 ◁ — 6 Laser — 1 — 8 ◀▮ — 33 ◁ — 36 P-Dem. — 38 TP — 41 Dig.E.

(F)BAS

(F)BAS

21 FM

18 TP
Ton

11 TP — 13 AM
Ton

16 Osz.

58 opt. W. — 59 opt. W.
60

43 BP

46 F-Dem.

48 TP — Ton

51 BP — 53 A-Dem. — 56 TP — Ton

42 Dig.S. — 39 TP — 37 P.Dem. — 34 ▷ — 7 ◀▮ — 2 — 9 Laser — 32 ▷ — 24 PM — 29 TP — 28 Dig.S.

(F)BAS

(F)BAS

49 TP — 47 F.Dem. — 44 BP
Ton

52 BP

57 TP — 54 A.Dem.
Ton

22 FM

19 TP — Ton

17 Osz. — 14 AM — 12 TP — Ton

3

4

0012377

Fig.2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | IEEE TRANSACTIONS ON BROADCASTING, Band BC-23, Nr. 1, März 1977, New York, US, C.C. TIMMERMANN: "Signal-to-noise ratio of a video signal transmitted by a fiber-optic system using pulse frequency modulation", Seiten 12-16 <br><br> * Seite 12, linke Spalte, Zeilen 1-5 * <br><br> -- | 1 |
| | IEEE TRANSACTIONS ON COMMUNICATIONS, Band COM-26, Nr. 7, Juli 1978, New York, US, T. NAKAHARA et al.: "An optical fiber video system", Seiten 955-961 <br><br> * Seite 956, linke Spalte, Zeilen 6-10, rechte Spalte, letzter Absatz * <br><br> -- | 1,2 |
| | US - A - 4 054 794 (LAUGHLIN) <br> * Spalte 3, Zeilen 19-46 * <br><br> -- | 1 |
| | NHK LABORATORIES NOTE, Nr. 132, Februar 1970, Tokyo, JP, Y. NUMAGUCHI et al.: "Simultaneous transmission of two television sound channels", Seiten 1-28 <br><br> * Seite 3, Zeile 7 bis Seite 5, Zeile 5 * <br><br> -- | 1 |
| D | DE - A - 2 012 293 (MESSERSCHMITT) <br> * Seite 6, Zeile 1 bis Seite 7, letzte Zeile; Seite 9, Zeilen ./. | 2-4 |

**KLASSIFIKATION DER ANMELDUNG (Int.Cl. 3)**

H 04 N 7/00

**RECHERCHIERTE SACHGEBIETE (Int. Cl. 3)**

H 04 N 7/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

[X] Der vorliegende Recherchenbericht wurde für alle Patentansprüche erstellt.

| Recherchenort | Abschlußdatum der Recherche | Prüfer |
|---|---|---|
| Den Haag | 17-03-1980 | DE ROECK |

EPA form 1503.1  06.78

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | 13-17 * <br><br> -- <br><br> RADIO MENTOR ELECTRONIC, Band 43, Nr. 3, März 1977, München, DE, K. VOIGT: "Digitale Übertragung mehrerer Tonkanäle in der H- Austastlücke des Fernsehsignals", Seiten 106,107 <br><br> * Seite 106, linke Spalte, Zeile 10 bis rechte Spalte, Zeile 8 * <br><br> -- | 4 | |
| A | NACHRICHTEN ELEKTRONIK, Jahrgang 32, Nr. 3, März 1978, Heidelberg, DE, "Ein Laser-Modulator für niedrige Frequenzen ", Seite 80 <br><br> * Linke Spalte, Zeile 1 bis Mittel Spalte, Zeile 4 * <br><br> ---- | 1,4 | RECHERCHIERTE SACHGEBIETE (Int. Cl. 3) |

EPA Form 1503.2  06.78